# EUROPÄISCHE PATENTANMELDUNG

(11) **EP 1 347 164 A2**
(43) Veröffentlichungstag der Anmeldung: **24.09.2003**
(21) Anmeldenummer: 02027054.2
(22) Anmeldetag: 03.12.2002
(51) Int. Cl.: F02D 41/38, F02D 41/40

(54) **Verfahren und Vorrichtung zur Steuerung der Kraftstoffzumessung in eine Brennkraftmaschine**

(30) Priorität: 21.03.2002 DE 10212509
(71) Anmelder: ROBERT BOSCH GMBH, 70442 Stuttgart (DE)
(72) Erfinder: Coates, Derek, 76676 Graben-Neudorf (DE); Amann, Patrick, 71254 Ditzingen (DE); Empacher, Lars, 70184 Stuttgart (DE)

(57) **Zusammenfassung**

Es werden eine Vorrichtung und ein Verfahren zur Steuerung der Kraftstoffzumessung in eine Brennkraftmaschine beschrieben, bei dem eine Kraftstoffeinspritzeinheit der Brennkraftmaschine Kraftstoff abhängig von wenigstens einem ersten Ansteuersignal und einem zweiten Ansteuersignal zumisst. Das erste Ansteuersignal steuert den Beginn und das Ende der Kraftstoffzumessung und das zweite Ansteuersignal steuert den Kraftstoffdruckaufbau. Das erste Ansteuersignal wird ausgehend von Signalen vorgegeben, die die einzuspritzende Kraftstoffmenge, den Beginn der Kraftstoffzumessung und den Kraftstoffdruck bei Beginn der Kraftstoffzumessung charakterisieren.

## Beschreibung

### Stand der Technik

Die Erfindung betrifft ein Verfahren und eine Vorrichtung zur Steuerung der Kraftstoffzumessung in eine Brennkraftmaschine.

Zur Kraftstoffzumessung in Brennkraftmaschinen werden häufig Kraftstoffeinspritzeinheiten verwendet, die den Kraftstoff abhängig von Ansteuersignalen eines Steuergeräts in die Brennkraftmaschine zumessen. Solche Kraftstoffeinspritzeinheiten können ein erstes Stellelement, das den Beginn und das Ende der Kraftstoffzumessung steuert, und ein zweites Stellelement, das den Druck, der für die Kraftstoffzumessung zur Verfügung steht, steuert beinhalten. Für solche Kraftstoffeinspritzeinheiten werden vorzugsweise Pumpe-Düse-Einheiten verwendet. Eine solche Kraftstoffeinspritzeinheit ist beispielsweise aus der EP 840 003 bekannt.

Bei üblichen Systemen ist in einem sogenannten Pumpenkennfeld die Förderdauer, d.h. der Abstand zwischen dem Beginn und dem Ende der Kraftstoffzumessung abhängig von verschiedenen Größen abgelegt. Üblicherweise ist die Förderdauer abhängig von der gewünschten Kraftstoffmenge QK, der aktuellen Drehzahl N der Brennkraftmaschine und einem Förderbeginn FB abgelegt. Dieses Pumpenkennfeld bzw. diese Pumpenkennfelder bilden das Verhalten eines bestimmten Pumpentyps beim Betrieb mit einem bestimmten Nocken ab und werden in der Regel vom Motorhersteller ermittelt. Üblicherweise besitzen Pumpen eines Pumpentyps einen festen Düsenöffnungsdruck. Daher ist die Abhängigkeit des Pumpenkennfeldes von den oben angegebenen Parametern ausreichend.

Werden bei Systemen bei denen der Düsenöffnungsdruck beeinflussbar ist, die Pumpenkennfelder nur abhängig von den Eingangsgrößen Förderbeginn, Drehzahl und Kraftstoffmenge gewählt, führt dies dazu, dass für Vor-, Haupt- und Nacheinspritzung jeweils unterschiedliche Kennfelder verwendet werden müssen, da die eingespritzte Menge wesentlich durch den Düsennadelöffnungsdruck beeinflusst wird. Da der Druckverlauf von der gesamten Vorgeschichte einer Einspritzung abhängt, müssen für jede mögliche Kombination der Förderdauern und Pausen aller vorangehenden Teileinspritzungen neue Kennfelder gemessen werden. Dies führt zu einem erheblichen Aufwand bei der Adaption, d.h. bei der Erfassung der Kennfelder.

Erfindungsgemäß wird bei einem Verfahren und einer Vorrichtung zur Steuerung der Kraftstoffzumessung in eine Brennkraftmaschine, bei dem eine Kraftstoffeinspritzeinheit der Brennkraftmaschine Kraftstoff abhängig von wenigstens einem ersten Ansteuersignal und einem zweiten Ansteuersignal zumisst, das Ansteuersignal, insbesondere die Ansteuerdauer, von einem Pumpenkennfeld in Abhängigkeit von Signalen vorgegeben, die die einzuspritzende Kraftstoffmenge, den Beginn der Kraftstoffzumessung und den Kraftstoffdruck bei Beginn der Kraftstoffzumessung charakterisieren.

Vorteilhaft ist, dass alle Teileinspritzungen mit den gleichen Pumpenkennfeldern beschrieben werden können. Dadurch wird der Aufwand bei der Applikation deutlich verringert, da nur ein Kennfeld für alle Teileinspritzungen gemessen werden muss. Gleichzeitig verringert sich dadurch auch der Aufwand an Speicherplatz im Steuergerät.

Die Erfindung wird nachstehend anhand der in der Zeichnung dargestellten Ausführungsformen erläutert. Die Figur zeigt ein Blockdiagramm der erfindungsgemäßen Vorgehensweise.

Üblicherweise ist in einem sogenannten Pumpenkennfeld die Förderdauer, d.h. der Abstand zwischen dem Beginn und dem Ende der Kraftstoffzumessung abhängig von verschiedenen Größen abgelegt. Üblicherweise ist die Förderdauer abhängig von der gewünschten Kraftstoffmenge QK, der aktuellen Drehzahl N der Brennkraftmaschine und einem Förderbeginn FB abgelegt. Dieses Pumpenkennfeld bzw. diese Pumpenkennfelder bilden das Verhalten eines bestimmten Pumpentyps beim Betrieb mit einem bestimmten Nocken ab und werden in der Regel vom Motorhersteller am Prüfstand ermittelt. Üblicherweise besitzen sogenannte Pumpe-Düse-Systeme einen mechanisch einstellbaren, bei einem Pumpentyp aber festen Düsenöffnungsdruck. Daher ist die Abhängigkeit des Pumpenkennfeldes von den oben angegebenen Parametern ausreichend.

Bei neueren Pumpe-Düse-Einheiten ist ein zweites Stellelement vorgesehen, das den Düsenöffnungsdruck beeinflusst. Mit diesem zweiten Steller ergibt sich die Möglichkeit, den Düsennadelöffnungsdruck zwischen dem mechanischen Öffnungsdruck und dem maximal zulässigen Injektordruck für jede Teileinspritzung variabel zu wählen. Werden hier die Pumpenkennfelder nur abhängig von den Eingangsgrößen Förderbeginn, Drehzahl und Kraftstoffmenge gewählt, würde dies dazu führen, dass für Vor-, Haupt- und Nacheinspritzung jeweils unterschiedliche Kennfelder verwendet werden müssen, da die eingespritzte Menge wesentlich durch den Düsennadelöffnungsdruck beeinflusst wird. Da der Druckverlauf von der gesamten Vorgeschichte einer Einspritzung abhängt, müssen für jede mögliche Kombination der Förderdauern und Pausen aller vorangehenden Teileinspritzungen neue Kennfelder gemessen werden. Dies führt zu einem erheblichen Aufwand bei der Adaption, d.h. bei der Erfassung der Kennfelder.

Erfindungsgemäß ist deshalb vorgesehen, dass zur Vermeidung des Applikations- und Messaufwandes und zur Reduzierung des im Steuergerät benötigten Speicherplatzes der Druck zu Beginn einer Einspritzung als zusätzliche Eingangsgröße in die Pumpenkennfelder aufgenommen wird. Damit wird erreicht, dass alle Teileinspritzungen durch das selbe erweiterte druckabhängige Pumpenkennfeld beschrieben werden können.

Vorteilhaft ist, dass alle Teileinspritzungen mit den gleichen Pumpenkennfeldern beschrieben werden können. Dadurch wird der Aufwand bei der Applikation deutlich verringert, da nur ein Kennfeld für alle Teileinspritzungen gemessen werden muss. Gleichzeitig verringert sich dadurch auch der Aufwand an Speicherplatz im Steuergerät.

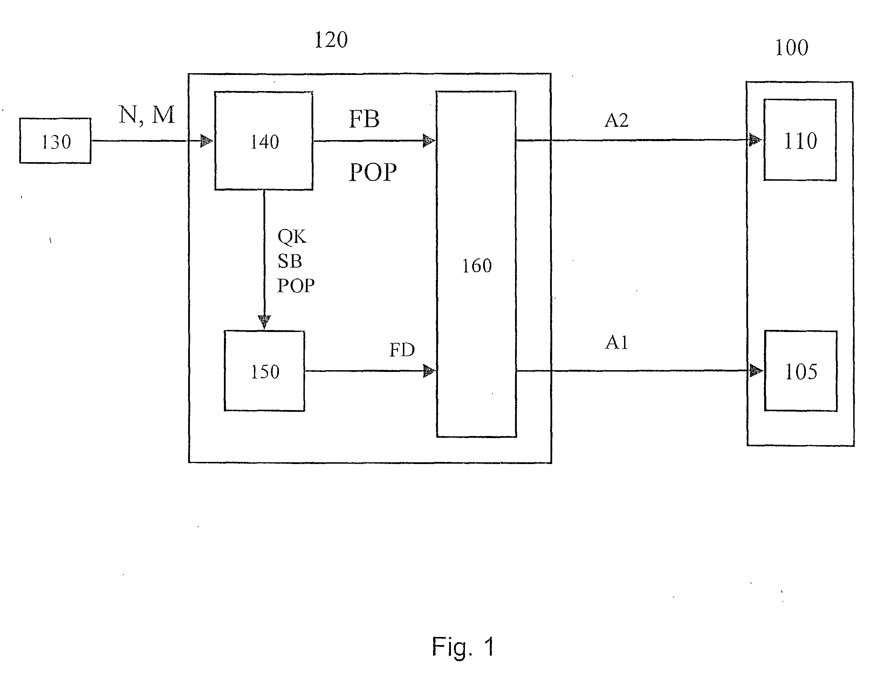

In Figur 1 ist die erfindungsgemäße Vorrichtung anhand eines Blockdiagramms dargestellt. Eine Kraftstoffeinspritzeinheit ist mit 100 bezeichnet. Diese Kraftstoffeinspritzeinheit umfasst ein erstes Stellelement 105 sowie ein zweites Stellelement 110. Mittels des ersten Stellelements kann der Einspritzbeginn, das Einspritzende und damit die Einspritzmenge beeinflusst werden. Mittels des zweiten Stellelements kann der Beginn und das Ende des Druckaufbaus beeinflusst werden, wobei sich diese Druckaufbauphase sich auf die eingespritzte Kraftstoffmenge auswirkt. Der mechanische Aufbau einer solchen Kraftstoffeinspritzeinheit ist beispielsweise in der EP 840 003 beschrieben. Die dort beschriebene Kraftstoffeinspritzeinheit wird üblicherweise als Pumpe-Düse-Einheit bezeichnet.

Die Kraftstoffeinspritzeinheit wird von einem Steuergerät 120 mit Ansteuersignalen A1 für das erste Stellelement und mit Ansteuersignalen A2 für das zweite Stellelement beaufschlagt. Hierzu wertet das Steuergerät 120 Signale verschiedener Sensoren 130 aus. Unter anderem wertet das Steuergerät das Signal N eines Drehzahlsensors und/oder eines Pedalwertgebers bzw. eine Drehmomentanforderung M aus.

Das Steuergerät 120 umfasst im wesentlichen eine Steuereinheit 140, ein Pumpenkennfeld 150 und eine Ansteuereinheit 160. Die Steuereinheit 140 beaufschlagt das Pumpenkennfeld 150 mit verschiedenen Signalen, wie beispielsweise einem Signal QK, das die gewünschte einzuspritzende Kraftstoffmenge charakterisiert, einem Signal FB, das den gewünschten Einspritzbeginn charakterisiert und einem Signal POP, das den Kraftstoffdruck beim Beginn der Kraftstoffeinspritzung kennzeichnet. Das Pumpenkennfeld 150 setzt diese Signale in ein Signal FD, das die Ansteuerdauer charakterisiert, um und übergibt diese an die Ansteuereinheit. Des weiteren beaufschlagt die Steuereinheit 140 die Ansteuereinheit 160 unmittelbar mit Signalen, die den Einspritzbeginn und den Druckaufbau charakterisieren. Diese Signale werden von der Ansteuereinheit 160 in Ansteuersignale A1 und A2 zur Beaufschlagung des ersten und des zweiten Stellelements umgesetzt.

Erfindungsgemäß ist vorgesehen, dass ein Pumpenkennfeld 150 verwendet wird, dem als Eingangsgrößen ein Signal bezüglich des Spritzbeginns bzw. des Förderbeginns, ein Drehzahlsignal N, eine einzuspritzende Kraftstoffmenge charakterisierendes Signal QK, sowie ein den Druck POP, der zu Beginn der Einspritzung im Hochdruckbereich der Kraftstoffeinspritzeinheit herrscht, charakterisierendes Signal zugeführt werden. Als Ausgangsgröße stellt das Pumpenkennfeld die berechnete Förderdauer FD bereit. Dieses druckabhängige Pumpenkennfeld gilt dann bei allen Teileinspritzungen.

Erfindungsgemäß wird der Druck POP, der zu Beginn der Einspritzung herrscht, intern im Steuergerät 120 aus anderen Größen abgeschätzt, bzw. bei einer alternativen Ausführungsform kann er mit einem geeigneten Sensor erfasst werden. Zur Abschätzung des Drucks wird insbesondere das Ansteuersignal für das zweite Stellelement verwendet, das den Druckaufbau steuert.

## Patentansprüche

1. Verfahren zur Steuerung der Kraftstoffzumessung in eine Brennkraftmaschine, bei dem eine Kraftstoffeinspritzeinheit der Brennkraftmaschine Kraftstoff abhängig von wenigstens einem ersten Ansteuersignal und einem zweiten Ansteuersignal zumisst, wobei das erste Ansteuersignal den Beginn und das Ende der Kraftstoffzumessung und das zweite Ansteuersignal den Kraftstoffdruckaufbau steuert, dass das erste Ansteuersignal ausgehend von Signalen vorgegeben wird, die die einzuspritzende Kraftstoffmenge, den Beginn der Kraftstoffzumessung und den Kraftstoffdruck bei Beginn der Kraftstoffzumessung charakterisieren.

2. Verfahren nach Anspruch 1, **dadurch gekennzeichnet, dass** die Dauer des ersten Ansteuersignals ausgehend von den Signalen vorgegeben wird, die die einzuspritzende Kraftstoffmenge, den Beginn der Kraftstoffzumessung und den Kraftstoffdruck bei Beginn der Kraftstoffzumessung charakterisieren.

3. Verfahren nach einem der vorherigen Ansprüche, **dadurch gekennzeichnet, dass** das erste Ansteuersignal ein erstes Stellelement und das zweite Ansteuersignal ein zweites Stellelement beaufschlagen.

4. Vorrichtung zur Steuerung der Kraftstoffzumessung in eine Brennkraftmaschine, bei dem eine Kraftstoffeinspritzeinheit der Brennkraftmaschine Kraftstoff abhängig von wenigstens einem ersten Ansteuersignal und einem zweiten Ansteuersignal zumisst, wobei das erste Ansteuersignal den Beginn und das Ende der Kraftstoffzumessung und das zweite Ansteuersignal den Kraftstoffdruckaufbau steuert, mit Mitteln, die das erste Ansteuersignal ausgehend von Signalen vorgeben, die die einzuspritzende Kraftstoffmenge, den Beginn der Kraftstoffzumessung und den Kraftstoffdruck bei Beginn der Kraftstoffzumessung charakterisieren.
